# EUROPEAN PATENT APPLICATION

(11) **EP 2 666 602 A1**
(43) Date of publication of application: **27.11.2013**
(21) Application number: 11856590.2
(22) Date of filing: 19.01.2011
(51) Int. Cl.: B26F 3/00

(54) **MULTI-FUNCTIONAL, MULTI-ARM DEVICE FOR WATERJET CUTTING**

(71) Applicant: Mateu Sentamans, Emilio, 46610 Guadassuar (Valencia) (ES)
(72) Inventor: Mateu Sentamans, Emilio, 46610 Guadassuar (Valencia) (ES)
(74) Representative: Maldonado Jordan, Julia
(86) International application number: PCT/ES2011/070035
(87) International publication number: WO 2012/098272

(57) **Abstract**

The present invention is related to a multi-functional waterjet cutting machine that allows pieces to be cut in a single machine incorporating different compatible cutting technologies (plasma cutting, oxy cutting, laser cutting, etc...) and using one or two independent inverted L-shaped arms (2) which can in turn include one or more water cutting heads (3) or combined with heads using other cutting technologies. Said arms are arranged on a chassis or frame (1) along with a cutting table or tank (4) that can be expanded using modules measuring 2 m x 2 m. The present invention additionally contains one or more high-pressure pumps, a feeder mechanism for the abrasive, a control interface (hardware and software), numerical control, and a mechanism for extracting sludge or waste.

## Description

### TECHNICAL FIELD

The invention that is protected in this patent is related to a multi-functional waterjet cutting machine that allows pieces of various rigid materials to be cut by means of the use of abrasive (metals, stone, ceramic, wood, etc.) and/or allows pieces of soft materials to be cut by means of pure water (rubber, foam). Its main applications are industrial and artistic applications.

In the metal working industrial field, the implementation of waterjet cutting technology is becoming increasingly more recognized and implemented. This is due to the good results extracted from it for achieving desired shapes in the cut pieces, and particularly to its characteristics of quality and precision in cutting, flexibility, the wide range of materials and of thicknesses that can be cut, etc. In recent years, waterjet cutting technology has been greatly boosted because it has proven as being able to work on pieces that other technologies simply cannot. According to general studies, waterjet cutting technology is the technological process that has experienced the most growth as a result of its versatility, being used in a number of applications worldwide, without being left behind with respect to other alternative technologies such as laser, plasma or even simple machining centers.

The invention is therefore related to a water cutting machine consisting of the integration of: on one hand two or more arms with their cutting heads arranged on one and the same rectangular chassis and each one having autonomous mobility; and on the other hand, a tank that can be expanded in extension by modules.

### PRIOR ART

The use of pressurized water for cutting sheet metals, including cutting with an abrasive, is a technique that is known for its qualities of cleanliness, precision, flexibility with respect to materials and production, capacity to work in aggressive environments, as well as the lack of thermal deformation of the worked products.

Systems conducting a certain fluid under high pressure, commonly water or a mixture of water and abrasive, along a defined path are currently known and disclosed on an industrial level. These systems are referred to with the terms "high-pressure water" or "waterjet".

Such systems are conventionally referred to as two-, three- and five-axis machines. The simplest and most common ones are three-axis machines assembled on a head that allow vertical movements along the Z (vertical) axis, to and from the workpiece. The base of the head is assembled on a bridge that moves parallel to the longitudinal axis of the bridge on the horizontal work plane. That bridge is in turn assembled on one or two rails that allow movement that is perpendicular to the longitudinal axis of the bridge. The high-pressure fluid jet generated in the head thus moves along a path defined in the X-Y (horizontal) plane in relation to the workpiece.

Furthermore, the more complex five-axis machines work in a similar manner but allow movements on two additional axes of rotation, usually a horizontal axis and another vertical axis, so five axes interact. Waterjet cutting with five axes can be useful for several reasons, including the possibility of cutting three-dimensional shapes.

There is no known or marketed machine with more than one cutting arm in the field of the waterjet cutting machinery. They are generally machines which take the form of bridge that runs along an inverted U-shaped chassis, or they are arm-type machines with an inverted L-shaped chassis. In the second case, they all have a single arm. As a result, waterjet cutting machines having a single arm or waterjet cutting machines with one or more parallel closed bridges are known in the state of the art. Therefore, this invention consists of another advance in the already implicit advantages of the arm-type rather than bridge-type structure, such as a greater operator accessibility to the machine, lower weight of the structure, faster movement speeds and an increase in the useful work space of the machine.

In relation to invention patents, various waterjet cutting means are already known and used, but they all have both operating and functional drawbacks, so the already developed means always have certain limitations with respect to the invention being presented. Inventions relating to specific cutting aspects are therefore already known as devices, such as publication number W02009/081037 AIRBUS FRANCE (2009) based on the maintenance problem for cutting machines and devices, patent W02010/140952 CONJET AB (2010) relating to a type of cutting machine mounted with guides, or curiously more rudimentary systems offering alternatives in the support means or mounts, such as the inventions described in US patent 4435902 MERCER et al. (1984) relating to an articulated arm, or in Utility Model DE20302648 UNIVERSITY OF HANOVER (2003) relating to an autonomous mobile cutting device.

The aforementioned all make up the prior art of the invention, but they are far from the device of the invention given their limitations or their specific uses and purposes for cutting pieces.

### TECHNICAL PROBLEM

Different types of machinery is used for different types of work today. This means that it is likely that to cut thin sheet metal, a laser cutting machine will be used, but to cut thicker sheet metal, a waterjet cutting machine is used regardless of if they are arm-type or bridge-type machines. This entails various drawbacks, such as the need to have several machines, higher consumptions, more maintenance, more risks of breakdowns, etc.

In waterjet cutting, it is fairly common to find in production and manufacturing centers a machine used for three-dimensional (3D) cutting, with a head specific for that type of cutting, and another different machine used for two-dimensional (2D) cutting.

In the same manner, it is common to find some industries that only have a single large machine for cutting also large jobs and using several heads on one and the same bridge, or even with different parallel bridges.

The present invention seeks to solve the concept of an inverted L-shaped arm type machine, the design and configuration of which provide it with greater functionality, working as if it were several machines. In conclusion, the invention provides a single multi-functional machine consisting of two or more arms each with heads for cutting in 3D or in 2D, and where appropriate, with several 2D cutting heads therein and only one 3D cutting head.

This is all provided in one and the same machine, with the inherent advantages it entails: flexibility concerning the type and number of jobs, productivity, performance, space reduction, lower power consumption, smaller number of peripherals, etc.

### TECHNICAL SOLUTION

However, the various structural assemblies of the devices vary according to both technical aspects and application-specific aspects. For that purpose, the present invention achieves the configuration of a single multi-functional waterjet cutting machine based on the type of desired application to be provided with great freedom and economy of movement.

As described, the current trend in the field of the machine tools consists of having the minimum number of machines necessary for being able to cover any type of job that the client may request. However, a higher production demand does not have to involve increasing the number of machines if it can simply be covered by expanding a single machine. In conclusion, the technological innovation proposed results from the interest in obtaining a complete machine integrating and responding to a capacity to work on pieces to be treated that has no operating limitations for any type of piece.

The most fundamental and basic aspect of this invention is the arrangement of a second autonomous arm or more autonomous arms attached by the same structure (chassis), which achieves the sought multi-functionality of two or several machines in one machine alone because previously only machines with two inverted U-shaped parallel bridges from each of which at least one head hangs were known.

In the present invention, one of the inverted L-shaped arms has three cutting heads: two two-dimensional (2D) cutting heads at 6200 bars, and another 5-axis three-dimensional (3D) cutting head. There is the possibility of incorporating up to four two-dimensional cutting heads in the same arm as well as a greater number of arms in the same machine. The inclusion of both configurations, i.e., the increase of the number of arms as well as the increase of the number of heads per arm, will logically increase productivity.

The arm-type, not the conventional bridge-type, configuration or structure increases user accessibility to the machine, maximally using the work surface and the reach of the head, as well as a light weight of the structure and the subsequent faster movement along the linear axes.

Any waterjet cutting machine has a series of peripherals or systems without which an optimal cutting process could not be completed. These include, for example, numerical control, the extraction system, the feed system for the abrasive, etc.

The inventive concept of the machine has a triple function:
1. Operation like a single machine, using the entire useful cutting surface. In this operating mode, sheet metals that have a maximum dimension of the useful surface of the cutting table can be worked on. This mode contemplates only one work area, but it has maximum dimensions. As an advantage, the useful work space is used to a maximum. Furthermore, this functional enables the work of a single arm, one or more heads in turn working, as well as the operation of several arms in turn working with one or more cutting heads.
   It is also polyvalent, as a factor of polyvalency is involved, i.e., there is a possibility of incorporating other cutting technologies in the same cutting table. For a certain type of jobs, for example cutting thin sheet metal to about 20 mm, plasma cutting may be of interest since the cutting speeds are higher. In this case, this technology different from water cutting technology could be implemented in one of the arms of the machine. The new arm would have the plasma cutting head, whereas the first arm would maintain the waterjet cutting heads. Other technologies such as oxy cutting could also be implemented in the same way provided that they are compatible.
2. Independent operation. In this mode there are actually two independent machines working together. On one hand is the first arm with one or more heads. On the other hand is the second arm with one or more heads or even a 5-axis head for three-dimensional cutting. The machine operates as if it was two different machines, and each arm can work the same programs or different programs since each one will be working in its work area and with the corresponding sheet metal. As an advantage, this mode offers the possibility of working different programs in sheet metals having a different thickness for each of the arms, since each of them has its own work area independent from the first.
3. Multi-area operation. In this last operating mode, both arms work in parallel in half of the machine (area 1). Both areas have independent protection, so while the machine is operating in area 1, the next piece of sheet metal to be cut can be prepared in area 2. Once the cutting program ends in area 1, the machine moves to cutting area 2 and will automatically start cutting the next program already loaded in the control. While the machine is operating in area 2, area 1 can be cleaned with the already cut program and prepared for the next cutting program, positioning the next piece of sheet metal to be cut. As an advantage, this mode offers reduced total cutting times because while the machine is operating in one area, the other area can be cleaned and prepared for the next program, without having to wait for the current program in operation to end. This reduced times result in a considerable productivity increase.

The triple functionality of the machine provides it with a production versatility and flexibility not achieved with other machine tools. It pools together three functions in a single machine, three in one, resulting in a polyvalent, independent and multi-area unit.

### ADVANTAGEOUS EFFECTS

Evidently the multi-functional aspect involves a scale economy in terms of cost, operation and results. The most immediate advantages to be mentioned are: considerable savings in space and in production energy, as well as a substantial economic savings taking into account that the number of peripherals necessary for the correct operation of the machine is reduced to half. As for productivity, this number would be doubled having the possibility of incorporating the operation of two machines in a single machine.

There are waterjet cutting machines today operating with a single arm with the advantages this entails with respect to the bridge: greater operator accessibility to the work area, better use of the cutting area and furthermore, the open gantry configuration offers greater flexibility and performance to such machinery.

By adding a second arm, the operational efficiency is increased and the same structure of the machinery is used.

Other advantages worth mentioning would be the possibility of applying different technologies in the same cutting table, different alternative and combined options of operating the machine while cutting and the autonomous operation of the machine. Accordingly, this involves reducing times and costs, and therefore increasing the cost effectiveness thereof.

The design of the new machine achieves significant economic and space savings, as well as a competitive advantage on the market today as a result of the enormous flexibility and automation of such machine tool. This high performance of the machine is obtained at a reduced price, increasing the company's competitiveness in the field both in national and international markets.

In summary, various technological advantages observed with the machine prototype of the present invention can be described, such as:
■ Productivity increase. Each arm could have 1 to 4 cutting heads at a pressure of 6200 bars.
■ Functionality. Different operating possibilities: a single machine, two independent or multi-area machines.
■ Greater autonomy and automation. Autonomous operation of the machine and external monitoring of the machine, or even on-site monitoring thereof, with the possibility of remote control.
■ Flexibility. In addition to the different machine operating options, 1 to 4 2D cutting heads can be easily coupled in the same arm, or a 3D cutting head could be coupled.
■ Expansion possibilities. The tank is especially designed for future expansions using modules measuring 2 m.
■ Polyvalency. Possibility of incorporating other technologies in the same cutting table for a certain type of jobs, such as plasma cutting.
■ Efficiency. The performance can be increased with the correct use of the machine.
■ Cost effectiveness. Cutting possibilities increase with a single machine, and it can compete with the production of two machines for the same amount of work. It basically consists of increasing the process capacity.
■ Economic competitiveness. Without a competitive price, market positioning is difficult

### DESCRIPTION OF THE DRAWINGS

To better understand the aforementioned general features of the multi-functional device, several drawings are attached to the present invention showing the various combinations as specified in an illustrative and non-limiting manner:

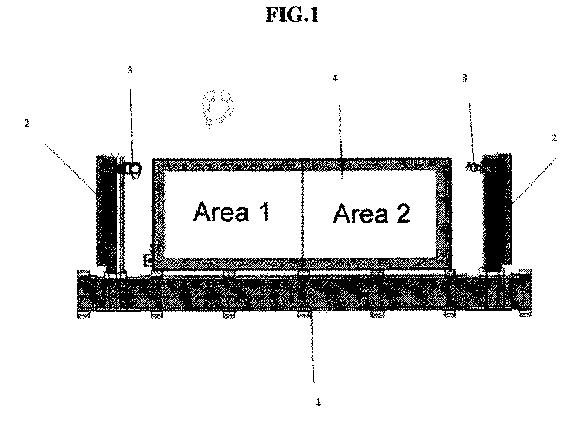

Figure 1 shows a plan view of a chassis or frame (1) with two arms (2) on the chassis and a head (3) on each arm and a cutting table or tank (4) with two work regions or areas.

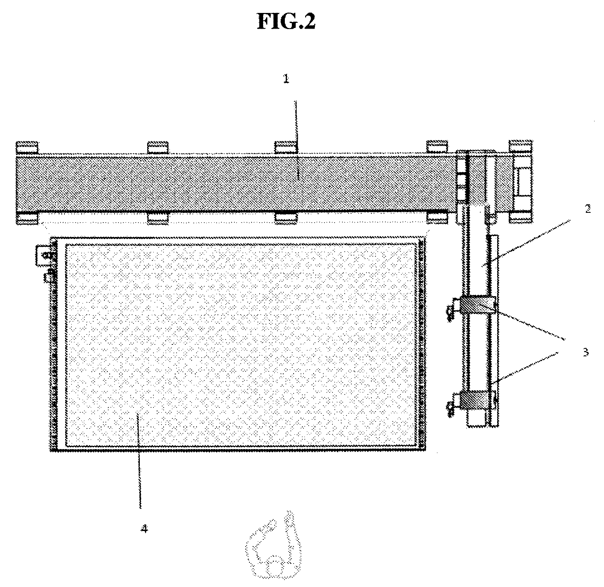

Figure 2 shows a plan view of a chassis or frame (1) with one arm (2) on the chassis and two heads (3) on the arm and a cutting table or tank (4).

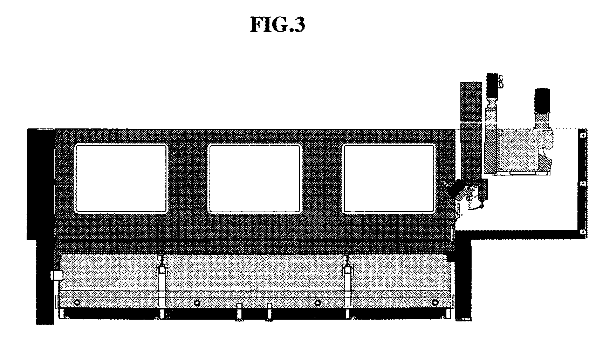

Figure 3 shows a plan view of a multi-functional waterjet cutting device with an arm in a cubicle.

### EMBODIMENT OF THE INVENTION

The invention consists of the following categories of technical means: a chassis or frame, two or more arms on the chassis, two or more heads on the arms, and a cutting table or tank.

The chassis or frame is a rectangular chassis made of steel or of other rigid materials on which one or more motor-driven arms are arranged with mobility by means of guides.

One or more inverted L-shaped arms are arranged on the guides of said chassis, moving integrally with them.

One or more waterjet cutting heads, particularly TCI Cutting brand cutting heads, is assembled on that or on each of those arms.

The cutting table or tank will be designed such that it can be easily expanded, i.e., the cutting surface can be expanded using modules measuring 2 m x 2 m. Sometimes users acquire a machine that has fixed standard dimensions and its work possibilities with respect to specific future jobs with dimension that is larger than the available cutting surface can be limited. With this possibility, the user can expand the cutting surface without needing to purchase a new machine for a specific job, expanding future work possibilities.

Auxiliary means such as the following are contemplated: high-pressure pumps conducting the water to the head, a feeder mechanism for the abrasive, a control interface (hardware and software), numerical control and a mechanism for extracting sludge or waste.

To control machine tools of such magnitude, it is necessary to develop a reliable control interface that controls each and every one of the elements of the machine, always keeping the user informed of any incident.

The interface must be dynamic, intuitive, user-friendly and easy for the user to interpret and/or use. The selection of the cutting files, the configuration of parameters for material and thickness, the display of values to be taken into account, the management of warnings and alarms, etc., must be able to be done in a manner that is simple and intuitive for the operator.

The optimal development of the HMI (Human Machine Interface) includes an on-line supervision and monitoring system applied to both the process and the machine. The machine will have ON-LINE management for providing complete autonomy to the operation of the machine.

A camera will be included in the structure of the machine with a broad field of vision that will monitor the machine movements at all times. The video will be displayed on screen in any support where the software is installed, whether it is a table top computer, a laptop, mobile telephone, etc. Furthermore, the parameter values, axis position, process variables, cut outlines and outlines to be cut, as well as the operating time and the remaining program time, among others, will be monitored in the program itself and updated every 5 seconds. It will be possible to see if the machine is working correctly or if it has eventually stopped and the alarm that triggered the stop signal from one's sofa at home.

A second version of the mentioned software will include the possibility of remotely operating some basic functions, such as 'Start' and 'Stop'. The operation of the machine could be stopped from the office if any anomaly is observed in the pieces, or the next cutting program could be started up without having to be next to the machine.

It must also have a four-channel numerical control that can control up to four arms in one and the same machine. Each of them serves to run different programs from the same numerical control. A machine with the features of the present invention would only need a single numerical control to run the programs and control the movements of both arms of the machine and one or more heads, whether they are 2D or 3D cutting heads.

However, a machine cannot operate without numerical control. If two different machines are used to cover production needs, two numerical controls would in turn be needed to control each machine. As is the case with the numerical control, each machine needs an electric cabinet, the control panel, keyboard, mouse, and of course the programming for each of them. In addition to the space savings, the present invention provides significant economic savings.

Likewise, the extraction system is responsible for extracting sludge from the tank that comes from the water, abrasive and waste of the cutting material on the cut piece. The system needs a series of valves for correct operation. Following the same reasoning as above, all that is needed is an extraction system for performing the same job that several different machines would perform, reducing the number of valves in half.

Without further repetition, in another order of matters and in other auxiliary means, the same advantages that would result from using the same or a single feed system for the abrasive in one and the same machine could be mentioned.

When a user has machinery of such magnitude, the intention is to make maximum use of the machine to increase the productivity of the user's factory with minimal maintenance. Maintenance of the peripherals is cut in half with this invention, since for a single machine that provides the functionality of two machines, half the peripherals are needed to perform the tasks of two machines. All this makes the machine of the invention machinery that is more profitable for the client.

Finally, each arm will be connected to a high-pressure pump that will supply 6200 bars of cutting water. The use of pumps at a pressure of 6200 bars is increasingly replacing the current use of 4100 bar pumps for the following reasons:
■ Increase of up to almost 50% of the pressure used in conventional equipment (3800/4100 bars)
■ Faster cutting speeds: depending on the material/thickness, an increase of up to 25% of the nominal speed is achieved.
■ Improved cutting quality. Tolerances are similar to those of cutting at 4100 bars, with the added improvement of an important reduction of taper of the piece and of the waterjet lag mark generated by the waterjet.
■ Reduced consumption of the abrasive used in cutting similar to the savings in cutting at 6200 bars.

Other less important features that should nevertheless also be taken into account are:
■ The same level of noise as other pumps with a smaller capacity, below 80 dB.
■ 20% increase in the pump component service life with respect to that corresponding to 4100 bars.

The pumps will be coupled by means of a bypass so that if one of the pumps fails or requires any maintenance task, the other one can supply the necessary pressure to the cutting head or heads intended for the first pump.

Finally and in general, the outer structure of the machine will be entirely in a cubicle, i.e., a door will cover the areas where the user can access the cutting table, preventing the waterjet from being able to exit the work area and reducing the danger for the user and reducing acoustic noise. The waterjet can be deviated from the work area when it is working in 3D since in that situation the head can reach orientations that cause the deviation of the jet. The inclination of the axis A of the 5-axis cutting head can reach any orientation for cutting three-dimensional pieces if the cutting circumstances require it and always complying with the machine safety guideline.

In conclusion, the measured technical specifications envisaged for the waterjet cutting equipment are summarized in the following table:

| | |
|---|---|
| WORK AREA | 6000 x 2000 x 200 mm |
| NUMBER OF HEADS | 1 - 4 2D heads/arm |
| | 1 3D head/arm |
| MAXIMUM SIMULTANEOUS X/Y POSITIONING SPEED | 60 mm/min |
| MAXIMUM ACCELERATION | 4 m/s² |
| MACHINE TOLERANCE | ±0.2 mm |
| REPEATABILITY | ±0.02 mm |

## Claims

1. A multi-functional, multi-arm waterjet cutting device in one and the same unit for use with a single or with several polyvalent cutting technologies with the independent operation of each arm acting in one or more work areas, **characterized in that** the chassis or frame (1) is a rectangular chassis made of steel or other rigid materials on which there is arranged in parallel one or more motor-driven arms with mobility by means of guides; one or more inverted L-shaped arms (2) is arranged on the guides of said chassis, moving integrally with them; one or more waterjet cutting heads (3) is assembled on that or on each of those arms, along with a cutting table or tank (4) that can be expanded using modules measuring 2 m x 2 m; and it contains one or more high-pressure pumps, a feeder mechanism for the abrasive, a control interface (hardware and software), numerical control, and a mechanism for extracting sludge or waste.

2. The multi-functional, multi-arm waterjet cutting device in one and the same unit for use with a single or with several polyvalent cutting technologies with the independent operation of each arm acting in one or more work areas according to claim 1, **characterized in that** one or more inverted L-shaped arms (2) incorporate one or more waterjet cutting heads (3) combined with heads using other cutting technologies.
